Europäisches Patentamt

European Patent Office

Office européen des brevets

(19)

(11) Veröffentlichungsnummer: **0 166 029**
**B1**

(12) **EUROPÄISCHE PATENTSCHRIFT**

(45) Veröffentlichungstag der Patentschrift: **25.07.90**

(21) Anmeldenummer: **84115562.5**

(22) Anmeldetag: **17.12.84**

(51) Int. Cl.⁵: **H 01 S 3/03, C 03 C 27/06**

(54) Gaslaserröhre und Verfahren zu ihrer Herstellung.

(30) Priorität: **29.06.84 DE 3424120**

(43) Veröffentlichungstag der Anmeldung:
**02.01.86 Patentblatt 86/01**

(45) Bekanntmachung des Hinweises auf die
Patenterteilung:
**25.07.90 Patentblatt 90/30**

(84) Benannte Vertragsstaaten:
**BE CH DE FR GB IT LI NL SE**

(56) Entgegenhaltungen:
**EP-A-0 119 408**
**DE-A-2 365 909**
**DE-A-2 943 358**
**DE-A-3 307 233**
**GB-A-1 422 602**
**GB-A-1 539 912**
**US-A-3 555 450**

(73) Patentinhaber: **Siemens Aktiengesellschaft**
**Wittelsbacherplatz 2**
**D-8000 München 2 (DE)**

(72) Erfinder: **Barth, Heinz, Ing.**
**Schlierseestrasse 55**
**D-8000 München 90 (DE)**
Erfinder: **Hübner, Erwin, Dr. rer. nat.**
**Breitensteinstrasse 2**
**D-8018 Grafing (DE)**
Erfinder: **Heynisch, Hinrich, Dr. rer. nat. Dipl.-Phys.**
**Im Birket 7**
**D-8032 Gräfelfing (DE)**
Erfinder: **Schneider, Adolf**
**Chiemgaustrasse 66**
**D-8000 München 90 (DE)**
Erfinder: **Brumme, Gerhard Dr.**
**Am Lochfeld 25**
**D-8088 Eching/Ammersee (DE)**

Courier Press, Leamington Spa, England.

**Beschreibung**

Die Erfindung bezieht sich auf eine Gaslaserröhre gemäß dem Oberbegriff des Anspruchs 1. Ein solcher Laser wird beispielsweise in der US—PS 37 17 823 beschrieben.

Schon seit Jahren ist es üblich, die optischen Abschlüsse eines Laserrohres—Brewster-Fenster oder (teildurchlässige) Resonatorspiegel—durch eine Glaslotverbindung zu fixieren. Glaslot hat hervorragende Abdichteigenschaften, verlangt jedoch Prozeßtemperaturen von mehr als 400°C, unter denen die optischen Qualitäten der Abschlüsse leiden.

Man hat deshalb schon relativ früh daran gedacht, den Fenster- oder Spiegelkörper in einen Metallrahmen einzulöten, der eine nachträgliche Politur und/oder Beschichtung des Körpers erlaubt (US—PS 35 55 450). Dieser Rahmen, der seinerseits an seinem äußeren Umfang mit dem Plasmarohr verschweißt oder verlötet ist, könnte aus Kupfer, Nickel oder Kobalt bestehen und sollte eine geringe Wandstärke zwischen etwa 0,01 cm und 0,06 cm sowie ein gewelltes Profil haben, damit der eingefaßte Körper möglichst frei von Thermospannungen bleiben kann. Eine derart elastische Halterung ist relativ unkompliziert, kann aber, wie sich herausgestellt hat, den optischen Körper unter den Belastungen des Normalbetriebs nicht immer in der vorgeschriebenen Position halten.

Justierfehler sind weniger zu befürchten, wenn man den transparenten Körper in eine metallische Ringscheibe einsetzt, diese Einheit auf eine mit dem Laserrohr verschmolzene Metallblende legt und beide Metallteile randseitig miteinander verschweißt (US—PS 37 17 823). Bei dieser Konstruktion muß der Doppelflansch in der Lage sein, zwischen der Schweißstelle und dem lichtdurchlässigen Körper während des Schweißprozesses eine Temperaturdifferenz von ca. 1200°C zu schaffen. Diese Anforderungen lassen sich nur dann erfüllen, wenn die beiden Metallteile sehr dünn sind und/oder einen großen Außendurchmesser haben, so daß die gesamte Aufhängung nicht sonderlich stabil ist und/oder beträchtliche Querabmessungen beansprucht. Die Bauform ist überdies aufwendiger, und zwar allein schon deshalb, weil man drei statt zwei vakuumdichte Verbindungen herstellen muß.

Der Erfindung liegt daher die Aufgabe zugrunde, bei einem Laser der eingangs genannten Art die optischen Abschlüsse so einzufassen, daß die Anordnung kompakt und robust ist, nicht ohne weiteres dejustiert werden kann und zudem keinen besonderen Fertigungsaufwand verlangt. Diese Aufgabe wird erfindungsgemäß durch eine Gaslaserröhre mit den Merkmalen des Patentanspruchs 1 gelöst. Wenn anspruchsgemäß Flansch und Platte "thermisch angepaßt" sein sollen, so bedeutet diese Vorschrift, daß zwischen beiden Teilen eine unter üblichen Bedingungen dauerhaft gasdichte Glaslotverbindung zustandekommen kann. Normalerweise ist dies möglich, wenn der Flansch im interessierenden Temperaturbereich einen mittleren thermischen Ausdehnungskoeffizienten hat, der zwischen dem 0,9- und 1,2-Fachen des entsprechenden Plattenkoeffizienten liegt. Eine besonders sichere Verbindung kommt dabei zustande, wenn sich der Flansch mit der Temperatur etwas stärker ausdehnt als die Platte.

Die vorgeschlagene Keramikfassung hat ein nur mäßiges Wärmeleitvermögen, das speziell bei Verwendung von Aluminiumoxid deutlich unter den Werten üblicher Metalle liegt. Man kommt also in den meisten Fällen mit einer einzigen, in das Laserrohr eingeschobenen Lochscheibe aus.

Daß ein Keramikflansch noch nicht in Erwägung gezogen worden ist, liegt möglicherweise daran, daß man bisher keine wirtschaftlich vertretbare Möglichkeit sah, wie die zur Keramikfixierung benötigte Prozeßwärme auf den Außenbereich begrenzt werden könnte, und sich insofern keine Vorteile aus dem hohen Wärmewiderstand versprach. Eine solche Auffassung wäre allerdings überholt: So ist beispielsweise einen Glaslotverbindung realisierbar, bei der man die Lötstelle durch gerichtete IR-Lichtquellen oder Laser gezielt bestrahlt und zugleich die Keramikscheibe rotieren läßt.

Wenn der lichtdurchlässige Körper thermisch besonders geschont werden muß, so empfiehlt es sich, zwischen Laserrohr und Keramikscheibe noch ein metallisches Übergangsteil einzufügen und die Oberfläche des optischen Körpers erst dann zu vergüten, wenn die Scheibe mit dem Körper und dem Übergangsteil verbunden ist. Dieses Zwischenstück, das zweckmäßigerweise in U-förmiges Profil hat, könnte an der Scheibe über ein Glaslot oder eine übliche Metall-Keramik-Verbindung und mit einem metallischen Laserrohrende durch eine Schweißverbindung befestigt sein.

Weitere vorteilhafte Ausgestaltungen und Weiterbildungen der Erfindung sind Gegenstand zusätzlicher Ansprüche.

Der Lösungsvorschlag soll nun anhand zweiter bevorzugter, in der Zeichnung schematisch dargestellter Ausführungsbeispiele näher erläutert werden. In den Figuren der Zeichnung sind einander entsprechende Teile mit gleichen Bezugszeichen versehen. Es zeigen:

Fig. 1 von einer ersten erfindungsgemäßen Gaslaserröhre das eine Ende, in einem teilweise weggebrochenen Seitenschnitt, und

Fig. 2 in der gleichen Darstellungsweise eine abgewandelte Ausführung.

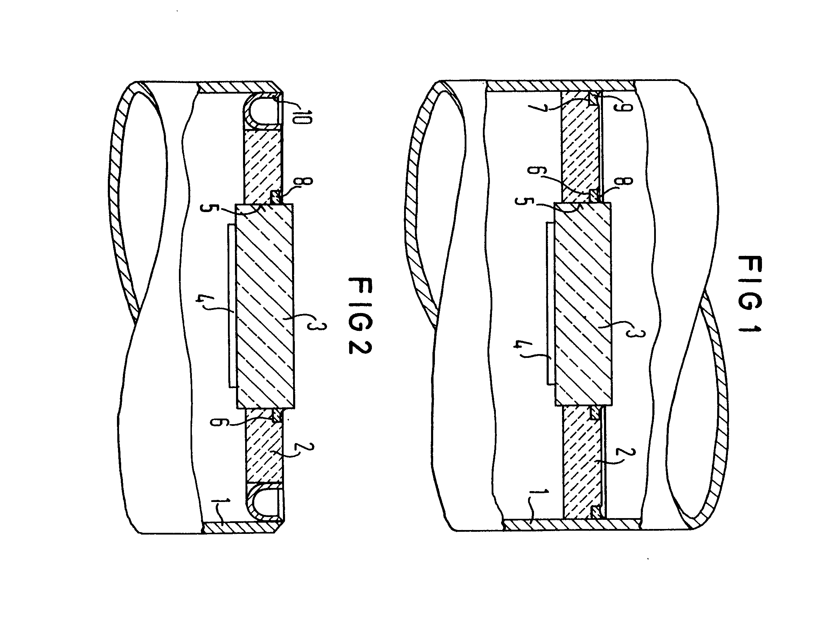

Die Laserröhre der Fig. 1 gehört zu einem "Sealed off"-CO$_2$-Laser, der für einige 10W Ausgangsleistung vorgesehen ist und beispielsweise in der Medizin eingesetzt werden könnte. Der Laser hat einen integrierten Resonator, das heißt, beide Resonatorspiegel sind vakuumdicht mit der Röhre verbunden. Die Figur zeigt das auskoppelseitige Ende der Röhre. Man erkennt ein Laserrohr 1 aus Metall, einen Flanschzin Form einer Lochscheibe und einen Abschlußplatte 3 in Form eines Spiegelkörpers.

Der Spiegelkörper ist innenseitig mit einer dielektrischen Mehrfachschicht 4 überzogen, die für eine Wellenlänge von 10,6 µm teildurchlässig ist. Der Körper selbst besteht aus Zinkselenid, das in diesem Wellenlängenbereich praktisch nicht absorbiert. Für die Scheibe ist Aluminiumoxid gewählt, das thermisch an ZnSe angepaßt ist. Die Scheibe hat eine Strahldurchtrittsöffnung 5, in die der Spiegelkörper mit beidseits vorspringender Grundfläche eingesetzt ist. Im Bereich der Öffnung und des Außenrandes enthält die Scheibe je eine Fuge 6, 7, die jeweils einen Glaslotring 8, 9 aufnimmt.

Der Rohrabschluß wird folgendermaßen hergestellt: Zunächst verlötet man den ZnSe-Körper mit der Keramikscheibe unter Verwendung eines stabilen oder kristallisierenden Glaslotes, das entweder als Pulver oder in einer vorgepreßten und -gesinterten Form vorliegt. Dann werden die beiden Grundflächen des Körpers poliert und die Innenfläche mit den erforderlichen dielektrischen Schichten versehen. Anschließend setzt man die Scheibe in das Laserrohr und verlötet sie unter lokaler Lichteinstrahlung.

Fig. 2 zeigt eine modifizierte Ausführung, bei der sich zwischen der Keramikscheibe und dem Laserrohr noch ein metallisches Übergangsteil 10 mit einem U-förmigen Profil befindet. Dieses Teil ist mit seinem inneren Schenkel in einer üblichen Metall-Keramik-Technik hartverlötet und an der Spitze seines äußeren Schenkels mit dem Ende des Laserrohrs verschweißt.

Bei der Herstellung des Rohrabschlusses der Fig. 2 geht man folgendermaßen vor: Nachdem die Scheibe erst mit dem Übergangsteil und dann mit dem Spiegelkörper verbunden ist, bearbeitet man die Körperoberflächen und verschweißt diese Einheit dann in einer Heliarc-Argonarc- oder Elektronenstrahltechnik mit dem Rohr. Auf der Höhe des Flanches wird dabei das Rohr mit einem Kupferring umschlossen, der einen Teil der zum Schweißen erforderlichen Wärme nach außen abzieht und dadurch den Spiegelkörper thermisch zusätzlich entlastet.

Die Erfindung ist nicht nur auf die dargestellten Ausführungsbeispiele beschränkt. So könnte man auch mit anderen Werkstoffen, beispielsweise einem Germaniumfenster, arbeiten. Außerdem kommen auch andere, fugenfreie Lotstellengeometrien in Frage, etwa eine Stumpflötung mit einer auf die Lochscheibe aufgelegten Abschlußplatte. Davon abgesehen ließe sich der Wärmeschutz des optischen Körpers noch durch weitere Maßnahmen, etwa wegverlängernde Nuten in der Keramikscheibe (DE—OS 33 07 233), verbessern. Im übrigen bleibt es dem Fachmann unbenommen, den Flansch mit mehr als einem optischen Abschlußelement zu versehen.

**Patentansprüche**

1. Gaslaserröhre mit folgenden Merkmalen:
1) sie weist ein Laserrohr (1) auf, des an seinen beiden Enden mit jeweils einem optischen Element vakuumdicht abgeschlossen ist;
2) das Element enthält einen scheibenförmigen, mit einer zentralen Öffnung (Strahldurchtrittsöffnung 5) versehenen Flansch (2) sowie eine für die Laserstrahlung durchlässig, thermisch an den Flansch (2) angepaßte Abschlußplatte (3);
3) der Flansch (2) ist an seinem äußeren Rand mit dem Laserrohr (1) verbunden;
4) die Abschlußplatte (3) deckt die Strahldurchtrittsöffnung (5) ab, ist mit dem Flansch (2) über ein Glaslot (8) verbunden und springt zumindest mit einer Grundfläche gegenüber dem Flansch (2) vor; dadurch gekennzeichnet, daß
5) der Flansch (2) aus einer Keramik besteht.

2. Gaslaserröhre nach Anspruch 1, dadurch gekennzeichnet, daß die Abschlußplatte (3) in an sich bekannter Weise in die Strahldurchtrittsöffnung (5) des Keramikflansches (2) eingesetzt ist.

3. Gaslaserröhre nach Anspruch 2, dadurch gekennzeichnet, daß sich das Glaslot (8) in einer die Abschlußplatte (3) umlaufenden Ausnehmung (Glaslotfuge 6) des Keramikflansches (2) befindet.

4. Gaslaserröhre nach einem der Ansprüche 1 bis 3, dadurch gekennzeichnet, daß der thermische Ausdehnungskoeffizient des Keramikflansches (2) größer ist als der der Abschlußplatte (3).

5. Gaslaserröhre nach einem der Ansprüche 1 bis 4, dadurch gekennzeichnet, daß der Keramikflansch (2) auch mit dem Laserrohr (1) über ein Glaslot (9) verbunden ist.

6. Gaslaserröhre nach einem der Ansprüche 1 bis 5, dadurch gekennzeichnet, daß der Keramikflansch (2) mehrere, in verschiedenen Abständen von der Flanschmitte umlaufende Nuten aufweist.

7. Gaslaserröhre nach einem der Ansprüche 1 bis 6, dadurch gekennzeichnet, daß die Abschlußplatte (3) aus Zinkselenid und der Keramikflansch (2) aus Aluminiumoxid bestehen.

8. Gaslaserröhre nach einem der Ansprüche 1 bis 7, dadurch gekennzeichnet, daß zwischen dem Laserrohr (1) und dem Keramikflansch (2) ein metallisches Übergangsteil (10) eingefügt ist, das mit dem Laserrohr (1) verschweißt und mit dem Keramikflansch (2) verlötet ist.

9. Gaslaserröhre nach Anspruch 8, dadurch gekennzeichnet, daß, das Übergangsteil (10) mit dem Keramikflansch (2) über ein Glaslot verbunden ist.

10. Gaslaserröhre nach Anspruch 8 oder 9, dadurch gekennzeichnet, daß das Übergangsteil (10) ein U-förmiges Profil hat, wobei der eine Schenkel mit der Schmalseite des Keramikflansches (2) verlötet ist und der andere Schenkel an seinem äußeren Ende mit dem Ende des Laserrohrs (1) verschweißt ist.

11. Verfahren zur Herstellung einer Gaslaserröhre gemäß einem der Ansprüche 8 bis 10, dadurch gekennzeichnet, daß zunächst der Keramikflansch (2) mit dem Übergangsteil (10) verbunden und anschließend mit der Abschlußplatte (3) verlötet wird, daß anschließend die Grundflächen der Abschlußplatte (3) geglättet und ggf. beschichtet werden und daß hiernach das Übergangsteil (10) mit dem Laserrohr (1) unter erhöhten Temperaturen verbunden wird, wobei die Gaslaserröhre während des Verbindungsvorgangs auf der Höhe des Übergangsteils (10) von einer metallischen Manschette umschlossen wird.

## Revendications

1. Tube pour laser à gas ayant les caractéristiques suivantes:
   1) il comporte un tube pour laser (1) qui est fermé d'une manière étanche au vide à ses extrémités par, respectivement, un élément optique;
   2) l'élément comporte une bride (2) en forme de disque et munie d'une ouverture centrale (ouverture de passage du rayonnement 5), ainsi qu'une plaque de fermeture (3) transparente au rayonnement laser et adaptée thermiquement à la bride (2);
   3) la bride (2) est reliée, par son bord extérieur, au tube pour laser (1);
   4) la plaque de fermeture (3) recouvre l'ouverture de passage du rayonnement (5), elle est reliée à la bride (2) par un verre de soudure (8) et elle déborde, au moins par une surface de base, de la bride (2); caractérisé en ce que,
   5) la bride (2) est en céramique.

2. Tube pour laser à gaz suivant la revendication 1, caractérisé en ce que la plaque de fermeture (3) est montée, d'une manière en soi connue, dans l'ouverture de passage du rayonnement (5) de la bride en céramique (2).

3. Tube pour laser à gaz suivant la revendication 2, caractérisé en ce que le verre de soudure (8) se trouve dans un évidement (rainure du verre de soudure 6) de la bride en céramique (2), qui entoure la plaque de fermeture (3).

4. Tube pour laser à gaz suivant l'une des revendications 1 à 3, caractérisé en ce que le coefficient de dilatation thermique de la bride en céramique (2) est supérieur à celui de la plaque de fermeture (3).

5. Tube pour laser à gaz suivant l'une des revendications 1 à 4, caractérisé en ce que la bride en céramique (2) est également reliée au tube pour laser (1) par un verre de soudure (9).

6. Tube pour laser à gaz suivant l'une des revendications 1 à 5, caractérisé en ce que la bride en céramique (2) comporte plusieurs gorges circulaires à diverses distances du milieu de la bride.

7. Tube pour laser à gaz suivant l'une des revendications 1 à 6, caractérisé en ce que la plaque de fermeture (3) est en séléniure de zinc et la bride de céramique (2) en oxyde d'aluminium.

8. Tube pour laser à gaz suivant l'une des revendications 1 à 7, caractérisé en ce que, entre le tube pour laser (1) et la bride en céramique (2), est insérée une pièce métallique de transition (10), qui est soudée au tube pour laser (1) et qui est brasée à la bride en céramique (2).

9. Tube pour laser à gaz suivant la revendication 8, caractérisé en ce que la pièce de transition (10) est reliée à la bride en céramique (2) par un verre de soudure.

10. Tube pour laser à gas suivant la revendication 8 ou 9, caractérisé en ce que la pièce de transition (10) a un profilé en forme de U, l'une des branches étant brasée au petit côté de la bride en céramique (2), et l'autre branche étant soudée par son extrémité extérieure, à l'extrémité du tube pour laser (1).

11. Procédé de fabrication d'un tube pour laser à gas suivant l'une des revendications 8 à 10, caractérisé en ce qu'il consiste à relier d'abord la bride en céramique (2) à la pièce de transition (10), et ensuite à la braser à la plaque de fermeture (3), à polir ensuite la surface de base de la plaque de fermeture (3) et, le cas échéant, à la revêtir d'une couche, et ensuite à relier la pièce de transition (10) au tube pour laser (1) à température élevée, le tube pour laser à gas étant entouré, pendant le processus de liaison, au niveau de la pièce de transition (10), d'une manchette métallique.

## Claims

1. Gas laser tube having the following features:
   1) it has a laser tube (1), which is terminated vacuum-tightly at both its ends by an optical element in each case;
   2) the element includes a disc-shaped flange (2), provided with a central opening (beam passage 5), as well as a terminating plate (3), transmissive to the laser radiation and thermally adapted to the flange (2);
   3) the flange (2) is connected at its outer rim to the laser tube (1);
   4) the terminating plate (3) covers the beam passage (5), is connected to the flange (2) by means of a glass solder (8) and projects at least with one base surface from the flange (2); characterized in that
   5) the flange (2) consists of a ceramic.

2. Gas laser tube according to Claim 1, characterized in that the terminating plate (3) is fitted in a way known per se into the beam passage (5) of the ceramic flange (2).

3. Gas laser tube according to Claim 2, characterized in that the glass solder (8) is located in a recess (glass solder joint 6) of the ceramic flange (2), which recess encircles the terminating plate (3).

4. Gas laser tube according to one of Claims 1 to 3, characterized in that the coefficient of thermal expansion of the ceramic flange (2) is greater than that of the terminating plate (3).

5. Gas laser tube according to one of Claims 1 to 4, characterized in that the ceramic flange (2) is also connected to the laser tube (1) by means of a glass solder (9).

6. Gas laser tube according to one of Claims 1 to 5, characterized in that the ceramic flange (2) has a plurality of encircling grooves at various distances from the flange centre.

7. Gas laser tube according to one of Claims 1 to 6, characterized in that the terminating plate (3) consists of zinc selenide and the ceramic flange (2) consists of aluminium oxide.

8. Gas laser tube according to one of Claims 1 to 7, characterized in that a metallic transitional part (10) is inserted between the laser tube (1) and the ceramic flange (2), which part is welded to the laser tube (1) and soldered to the ceramic flange (2).

9. Gas laser tube according to Claim 8, characterized in that the transitional part (10) is connected to the ceramic flange (2) by means of a glass solder.

10. Gas laser tube according to Claim 8 or 9, characterized in that the transitional part (10) has a U-shaped profile, the one leg being soldered to the narrow side of the ceramic flange (2) and the other leg being welded at its outer end to the end of the laser tube (1).

11. Method of producing a gas laser tube according to one of Claims 8 to 10, characterized in that firstly the ceramic flange (2) is connected to the transitional part (10) and subsequently is soldered to the terminating plate (3), in that subsequently the base surfaces of the terminating plate (3) are smoothed and possibly coated and in that thereafter the transitional part (10) is connected to the laser tube (1) at elevated temperatures, the gas laser tube being surrounded by a metallic collar on a level with the transitional part (10) during the connecting operation.

## FIG 1

## FIG 2